# EUROPEAN PATENT SPECIFICATION

(11) **EP 0 772 649 B1**
(45) Date of publication and mention of the grant of the patent: **17.06.1998**
(21) Application number: 95932971.5
(22) Date of filing: 26.07.1995
(51) Int. Cl.: C08L 67/06, C08K 13/04, C08K 13/06

(54) **MOULDING COMPOUND**
FORMTEIL
COMPOSE DE MOULAGE

(30) Priority: 29.07.1994 BE 9400719
(43) Date of publication of application: 14.05.1997
(73) Proprietor: DSM N.V., 6411 TE Heerlen (NL)
(72) Inventor: MORATO VIA, Josep, Antoni, E-08739 Les Cabanyes (ES)
(86) International application number: NL9500259
(87) International publication number: WO9604337

(56) References cited:
- WO-A-93/07102

## Description

The invention relates to a moulding compound comprising a thermosetting polymer, one or more peroxide catalysts, fibrous reinforcing material and a mixture of different types of fillers, comprising a first type, filler I, consisting of particles with sizes of less than 250 µm and a MOHS hardness of between 2 and 5, and a second type, filler II, having a MOHS hardness of between 6 and 10.

Such a moulding compound is known from WO-A-9307102. The moulding compound described in WO-A-9307102 is used for decorative purposes. Moulding compounds of the kind described in WO-A-9307102 contain two different types of fillers. The second type of filler consists of particles with sizes of between 20 µm and 5 mm and a MOHS hardness of between 6 and 10. Thanks to the presence of this second type of filler in the known compound, a marble-like, granite-like effect is obtained in the end product. The second type of filler is also used to create colour effects in the moulding compound. River sand, glass beads or glass flakes are used. The drawback of such fillers is that the colour can be varied to a limited extent only and that the possibilities are limited to the colours in which the second type of filler is available. Another drawback of the moulding compound described in WO-A-9307102 is that the mould in which the moulding compound is compressed into a moulded part is damaged during compression moulding of the compound. It is scratched and hence becomes unsuitable for frequent use. As such moulds are generally very expensive, it is important that such a mould can be used for as long as possible.

The aim of the invention is to provide a moulding compound that does not present the above drawbacks.

This is achieved in that filler II consists of particles with sizes of less than 20 µm and in that the moulding compound also contains a third type of filler, filler III, which is a colouring filler consisting of particles with sizes of ≤ 1.25 mm and having a MOHS hardness of between 2 and 5.

This ensures that the mould in which the moulding compound is compressed remains free of scratches. When the moulding compound according to the invention has been processed into an end product it moreover has a better appearance, a fine depth effect, which is not obtained with the moulding compound according to WO-A-9307102, with which only the particles at the surface are observable.

Filler II preferably consists of particles with sizes of less than 15 µm and in particular less than 10 µm.

Filler II can be chosen from various kinds of silica. Preferably, use is made of cristobalite, which may or may not be provided with a layer (what is known as 'sizing'), usually of silane-like compounds such as methacrylic silane. A methacrylic chromic chloride complex may also be used as the sizing. Filler III serves as a colouring filler and consists preferably of cured particles of a thermosetting resin in which a pigment and a filler A are dispersed.

Unsaturated polyesters, vinyl esters, acrylic resins and/or melamine-formaldehyde resins may be used as the thermosetting polymer for the preparation of filler III. Preferably, an unsaturated polyester resin is used.

Any pigment may be used for application in filler III.

The compounds that are suitable for use as filler I may also be used as filler A for the preparation of filler III. Preferably, aluminium trihydrate is used as filler A.

The cured particles of filler III can be prepared by first mixing the components and then causing them to cure, with the aid of for example a peroxide catalyst, in the form of for example a sheet. The sheet can then be ground to particles with a particle size of at most 1.25 mm and preferably at most 750 µm. Fillers of the type of filler III are commercially available, for instance at the SAFAS company in New Jersey, USA.

The use of filler III in the moulding compound according to the invention entails a number of major advantages. Such cured particles containing a pigment ensure excellent colour stability. It enables great variation in colour in the moulding compound because there are no limitations with respect to the pigment used. Differently coloured particles can of course be used. Partly thanks to the use of filler III, the end product has a fine depth effect, which means that not only the particles directly at the surface are visible, but also particles deeper down.

For particles deeper down to be better visible, the end product must preferably have a certain degree of transparency. This transparency of the end product is enhanced when the refractive indices of the thermosetting resin and filler I are more or less the same.

Filler I may be chosen from a range comprising for example aluminium trihydrate, calcium carbonate, calcium sulphate, talc, kaolin. Preferably, aluminium trihydrate is used. In particular, use is made of a filler I that has a bimodal particle size distribution. The use of a filler I with a bimodal particle size distribution ensures a better compaction of filler I and hence a high filler content in the moulding compound. The advantage of this bimodal distribution of filler I is that the viscosity of the moulding compound as a whole can be reduced, which results in a better processability. Filler I preferably contains essentially two types of particles with different particle sizes, viz. particles with sizes of 1-3 µm and particles with sizes of 7-15 µm.

Several resins are suitable for use as the thermosetting resin, such as unsaturated polyesters, vinyl esters and/or acrylic resins for example.

The unsaturated polyesters are preferably condensation products of an unsaturated dicarboxylic acid or diacid anhydride and one or more dialcohols.

Examples of unsaturated dicarboxylic acids are maleic acid, fumaric acid, etc. Optionally, saturated dicarboxylic acids may also be present, such as terephthalic acid, adipic acid, isophthalic acid, succinic acid, etc.

Usually glycols, such as propylene glycol, dipropylene glycol, diethylene glycol or 1,4-butanediol, are used as the dialcohols.

The vinyl esters that can be used in the moulding compound according to the invention are generally obtained through the reaction of an acrylic monomer and an epoxy resin.

Acrylic resins that can be used are generally composed of a prepolymer of polyacrylate-urethane or a polymethacrylate-urethane and an acrylic monomer, acrylic dimer and/or acrylic trimer. The thermosetting resin may comprise a monomer or monomer mixture as solvent and cross-linking agent. Suitable monomers are for example styrene, vinyl toluene, tri-allyl-cyanurate, etc.

The moulding compound according to the invention also contains one or more catalysts for curing of the thermosetting resin. They are generally organic peroxides, such as benzoyl peroxide, tertiary butylperoxide, dicumylperoxide, tertiary butyl perbenzoate, etc.

Often a radical scavenger is also present to prevent that the curing reaction starts too early, for example parabenzoquinone, hydroquinone, chloranil, nitrobenzene and the like.

The moulding compound according to the invention may additionally contain a thermoplastic polymer, for instance as shrinkage reducing agent.

Suitable thermoplastic polymers for the moulding compound are for example polyethylene, polypropylene, styrene-butadiene rubber, polyvinylacetate, polymethyl methacrylate, polystyrene and the like. Preferably, polyethylene is used.

Moulding compounds as described above also comprise a fibrous reinforcing material. Usually they are glass fibres. They may however also be synthetic fibres, such as polyamide fibres or polyester fibres, for example. The length of the fibres used in the moulding compound is on average between 2 and 50 mm.

To ensure that a moulding compound is easily released from a mould use is usually made of one or more release agents. Suitable release agents are for example calcium stearate and zinc stearate.

The moulding compound may of course also contain other additives such as pigments, etc.

The weight ratios of the components of the moulding compound relative to the overall weight are preferably as follows:

| | |
|---|---|
| thermosetting resin | 15 - 25 wt.% |
| thermoplastic polymer | 2 - 10 wt.% |
| release agent | 0.5 - 1.5 wt.% |
| peroxide | 0.2 - 0.5 wt.% |
| fibrous reinforcing material | 5 - 25 wt.% |
| filler I | 20 - 40 wt.% |
| filler II | 10 - 30 wt.% |
| filler III | 5 - 30 wt.% |

The wt.% are chosen such that the total equals 100 wt.%.

The moulding compound is prepared by mixing the components. The thermoplastic polymer can be added as a powder. It is also possible to first dissolve the thermoplastic polymer in a monomer or a mixture of monomers. The monomer is usually styrene or vinyl toluene, optionally mixed with methacrylic acid or acrylic acid. Incompatibility and/or dispersion problems are avoided by first dissolving the thermoplastic polymer.

The doughy mass that is obtained after all the components have been mixed, which is called a 'bulk moulding compound', or sometimes a 'dough moulding compound', can later be processed into the definitive end product. It is also possible to pass the mass between two rolls, so that a so-called 'sheet moulding compound' is obtained, which sheet moulding compound can then be compressed into an end product. The moulding compound can also be processed into an end product by means of injection moulding.

Such moulding compounds according to the invention can be processed into objects with either a shiny or a matt surface. The great advantage of a matt surface is that the object can be repaired invisibly, even with the aid of ordinary sandpaper, when damaged.

The end products manufactured from the moulding compound according to the invention find application in sanitary equipment and kitchens in particular, for example in washbasins, kitchen tops, etc. Trays, garden tables, etc., can however also excellently be produced from the moulding compound according to the invention.

### Example I

The moulding compound was prepared from:

| | |
|---|---|
| 18.2 wt.% | Synolite® 7223-N-1, from DSM Resins; this is an unsaturated polyester |
| 2.7 wt.% | Coathylene® HA 1681, from Plastlabor, a low-density polyethylene (LDPE) with a density of 916 kg/m3, a melt index of 70 and a particle size of between 5 and 75 µm, used as shrinkage reducing agent |
| 1.7 wt.% | styrene |
| 0.32 wt.% | Trigonox® C, a peroxide catalyst from AKZO |
| 0.05 wt.% | parabenzoquinone, from Merck |
| 1.3 wt.% | zinc stearate as a release agent |
| 10.5 wt.% | glass fibres of 6 mm length |
| 13.2 wt.% | Galaxy White® 200-800, from SAFAS, as filler III |
| 1.5 wt.% | Galaxy Black® 200-800, as filler III |
| 18 wt.% | Martinal® ON-310, from Martinswerk; this is aluminium trihydrate having an average particle size of 9-13 µm, as filler I |
| 9 wt.% | Martinal® OL-104; this is aluminium trihydrate having an average particle size of 1.3-2.6 µm, as filler I |
| 23.5 wt.% | cristobalite, from Quartzwerke; this is a silica consisting of particles, having sizes of <20 µm with a MOHS hardness of 7, as filler II. |

These components were mixed in a Z-shaped blade kneader from Werner & Pfleiderer and the resulting compound was then compression moulded into a matt kitchen top in a press.

The kitchen top had an excellent depth effect. Signs of damage could be invisibly removed with the aid of sandpaper. No scratches had been formed on the mould used in the press.

### Comparative Experiment A

The following components were mixed in a Z-shaped blade kneader as used in Example I:

| | |
|---|---|
| 13.6 wt.% | unsaturated polyester of the isophthalic type |
| | dissolved in styrene |
| 9.1 wt.% | polymethyl methacrylate in a 30% solution in |
| | styrene |
| 0.2 wt.% | titanium dioxide |
| 0.3 wt.% | tertiary butylperbenzoate |
| 1.6 wt.% | zinc stearate |
| 38.5 wt.% | aluminium trihydrate (filler I) |
| 10.9 wt.% | cristobalite from the company |
| | Quartzwerke, a silica with a |
| | mean particle size of 33 µm (filler II) |
| 15.7 wt.% | black silicon quartz with MOHS |
| | hardness of 7 (filler II) |
| 10.0 wt.% | glass fibre of 6 mm length. |

This mixture was compressed in the same press as in Example I, which resulted in a matt kitchen top.

This kitchen top, however, had no depth effect; only the particles at the surface of the top were visible. Attempts to remove signs of damage with the aid of sandpaper resulted in white marks on the surface. The mould of the press was moreover scratched.

## Claims

1. Moulding compound comprising a thermosetting polymer, one or more peroxide catalysts, fibrous reinforcing material and a mixture of different types of fillers, comprising a first type, filler I, consisting of particles with sizes of less than 250 µm and a MOHS hardness of between 2 and 5, and a second type, filler II, which has a MOHS hardness of between 6 and 10, characterised in that filler II consists of particles with sizes of less than 20 µm and that the moulding compound moreover contains a third type of filler, which filler III comprises a pigment, is different from filler I, and consists of particles with sizes of ≤ 1.25 mm and with a MOHS hardness of between 2 and 5.

2. Moulding compound according to claim 1, characterised in that filler III consists of cured particles of a thermosetting resin in which a pigment and a filler A are dispersed.

3. Moulding compound according to claim 1 or claim 2, characterised in that filler II consists of particles with sizes of less than 15 µm.

4. Moulding compound according to claim 3, characterised in that filler II consists of particles with sizes of less than 10 µm.

5. Moulding compound according to any one of claims 1-4, characterised in that filler I has a bimodal particle size distribution.

6. Moulding compound according to claim 5, characterised in that filler I consists of particles having sizes of 1-3 µm and particles having sizes of 7-15 µm.

7. Product obtained from the moulding compound according to any one of claims 1-6.

## Patentansprüche

1. Formverbund, welcher ein thermohärtendes Polymer, einen oder mehrere Peroxid-Katalysatoren, Faserverstärkungsmaterial und eine Mischung verschiedener Füllstoff-Typen umfaßt, die einen ersten Typ, Füllstoff I, bestehend aus Teilchen mit Größen von weniger als 250 µm und einer Mohs-Härte zwischen 2 und 5, und einen zweiten Typ, Füllstoff II, der eine Mohs-Härte zwischen 6 und 10 aufweist, umfaßt, dadurch gekennzeichnet, daß der Füllstoff II aus Teilchen mit Größen von weniger als 20 µm besteht, und daß der Formverbund außerdem einen dritten Füllstoff-Typ enthält, welcher Füllstoff III ein Pigment umfaßt, vom Füllstoff I verschieden ist, und aus Teilchen mit Größen von ≤ 1,25 mm und mit einer Mohs-Härte zwischen 2 und 5 besteht.

2. Formverbund nach Anspruch 1, dadurch gekennzeichnet, daß der Füllstoff III aus ausgehärteten Teilchen eines thermohärtenden Harzes besteht, in dem ein Pigment und ein Füllstoff A dispergiert sind.

3. Formverbund nach Anspruch 1 oder Anspruch 2, dadurch gekennzeichnet, daß der Füllstoff II aus Teilchen mit Größen von weniger als 15 µm besteht.

4. Formverbund nach Anspruch 3, dadurch gekennzeichnet, daß der Füllstoff II aus Teilchen mit Größen von weniger als 10 µm besteht.

5. Formverbund nach einem der Ansprüche 1 bis 4, dadurch gekennzeichnet, daß der Füllstoff I eine bimodale Teilchengrößenverteilung aufweist.

6. Formverbund nach Anspruch 5, dadurch gekennzeichnet, daß der Füllstoff I aus Teilchen mit Größen von 1 bis 3 µm und Teilchen mit Größen von 7 bis 15 µm besteht.

7. Produkt, welches aus dem Formverbund nach einem der Ansprüche 1 bis 6 erhalten wird.

## Revendications

1. Composé de moulage comprenant un polymère thermodurcissable, un ou plusieurs catalyseurs à base de peroxyde, une matière de renforcement fibreuse et un mélange de différents types de charges, comprenant un premier type, la charge I, se composant de particules ayant des dimensions inférieures à 250 µm et une dureté Mohs comprise entre 2 et 5, et un deuxième type, la charge II, qui possède une dureté Mohs comprise entre 6 et 10, caractérisé en ce que la charge II se compose de particules ayant des dimensions inférieures à 20 µm et que de plus le composé de moulage contient un troisième type de charge, laquelle charge III comprend un pigment, qui est différente de la charge I, et se compose de particules ayant des dimensions ≤ 1,25 mm et ayant une dureté Mohs comprise entre 2 et 5.

2. Composé de moulage selon la revendication 1, caractérisé en ce que la charge III se compose de particules durcies d'une résine thermodurcissable dans laquelle un pigment et une charge A sont dispersés.

3. Composé de moulage selon la revendication 1 ou la revendication 2, caractérisé en ce que la charge II se compose de particules ayant des dimensions inférieures à 15 µm.

4. Composé de moulage selon la revendication 3, caractérisé en ce que la charge II se compose de particules ayant des dimensions inférieures à 10 µm.

5. Composé de moulage selon l'une quelconque des revendications 1 à 4, caractérisé en ce que la charge I possède une distribution granulométrique bimodale.

6. Composé de moulage selon la revendication 5, caractérisé en ce que la charge I se compose de particules ayant des tailles de 1 à 3 µm et des particules ayant des tailles de 7 à 15 µm.

7. Produit obtenu à partir du composé de moulage selon l'une quelconque des revendications 1 à 6.
